**Europäisches Patentamt**

**European Patent Office**

**Office européen des brevets**

(19)

(11) Veröffentlichungsnummer: **0 300 965**
**B1**

(12) **EUROPÄISCHE PATENTSCHRIFT**

(45) Veröffentlichungstag der Patentschrift: **16.01.91**

(51) Int. Cl.⁵: **G 01 N 21/05**

(21) Anmeldenummer: **88810479.1**

(22) Anmeldetag: **13.07.88**

(54) **Prozessküvette.**

(30) Priorität: **22.07.87 CH 2774/87**

(43) Veröffentlichungstag der Anmeldung:
**25.01.89 Patentblatt 89/04**

(45) Bekanntmachung des Hinweises auf die
Patenterteilung:
**16.01.91 Patentblatt 91/03**

(84) Benannte Vertragsstaaten:
**AT CH DE ES FR GB IT LI SE**

(56) Entgegenhaltungen:
**DE-U-8 606 172**
**GB-A- 722 967**

**ANALYTICAL CHEMISTRY, Band 45, Nr. 4, April
1973, Seiten 802,803; E. OLTAY et al.: "Infrared
flow cell for use at elevated temperatures and
pressures"**

**PATENT ABSTRACTS OF JAPAN, Band 6, Nr.
217 (P-152)1095r, 30. Oktober 1982, Seite 40 P
152; & JP-A-57 120 843**

(73) Patentinhaber: **CIBA-GEIGY AG**
**Klybeckstrasse 141**
**CH-4002 Basel (CH)**

(72) Erfinder: **Danigel, Harald, Dr.**
**Kleinhüningerstrasse 98**
**CH-4057 Basel (CH)**
Erfinder: **Schatzmann, Hans-Rudolf**
**Burgfelderstrasse 33**
**CH-4055 Basel (CH)**

(56) Entgegenhaltungen:
**APPLIED SPECTROSCOPY, Band 28, Nr. 3, 1974,
Seiten 282,283; G. BUTT et al.: "A variable path
length infrared cell for use at elevated
temperatures"**

Courier Press, Leamington Spa, England.

# Beschreibung

Die Erfindung betrifft eine Prozessküvette gemäss Oberbegriff des Patentanspruches 1.

Derartige prozessküvetten sind bereits in unterschiedlichen Ausbildungsformen bekannt. Einige dieser Messvorrichtungen weisen eine Verstellbarkeit des Messfensterabstandes auf, meist jedoch ist dieser Messabstand fix vorgegeben und nur schwer oder gar nicht veränderbar.

Prozessküvetten der letzteren Art sind z.B. aus dem DE-G-84 07 054.4, der Analytical Chemistry, Vol. 45, No. 4, April 1973 oder dem DE-G-86 06 172.0 bekannt. Alle diese Vorrichtungen weisen zwei mit ihren planparallelen Lichtaustrittsfenstern in genau definiertem Abstand voneinander justierte Messfenster auf, welche in tubusähnliche Träger oder Halterungen gefasst sind. Prozessküvetten, welche einen variablen Messfensterabstand aufweisen, sind in ihrem prinzipiellen Aufbau gleich. Die Verstellung des Messabstandes erfolgt z.B. in der aus der Applied Spectroscopy, Vol. 28, No. 3, 1974 bekannten Vorrichtungen über einen mit einem Innengewinde versehenen Kolben, an dem ein Messfenster befestigt ist, welcher auf den mit einem Aussengewinde versehenen Tubus mit dem zweiten Messfenster aufgescbraubt wird. Bei der aus der GB-A-722,967 bekannten Vorrichtung erfolgt die Messfensterabstandsverstellung über Einstellschrauben.

Derartige Prozessküvetten werden nach Möglichkeit unmittelbar in Rohrleitungen von Prozessanlangen eingebaut um On-line Messungen der zu analysierenden Flüssigkeit vornehmen zu können. Die Messfensterabstände sind sehr klein gewählt, insbesondere bei der Analyse von trüben, gefärbten oder dergleichen Flüssigkeiten mit hoher Lichtabsorption sind Minimalabstände zwischen dem Messlicht emittierenden und dem Messlicht empfangenden Messfenster von etwa $10^{-5}$ m notwendig. Zur On-line Messung direkt in Rohrleitungen eingebaute Prozessküvetten unterliegen andererseits relativ grossen Temperaturschwankungen in Abhängigkeit von der Temperatur der zu analysierenden Messflüssigkeit. Berücksichtigt man den Wärmeausdehnungskoeffizienten der Messfensterträger oder Halterungen, welcher in der Grössenordnung von etwa $10^{-5}$ $K^{-1}$ liegt, so ist sehr leicht einsichtlich, dass es durch Wärmedehnungen zu über eine Toleranzgrenze hinausgehenden Verfälschungen der Messergebnisse kommt. Alle bekannten Prozessküvetten weisen jedoch den Nachteil auf, keine Mittel zur Kompensation des durch die Temperaturdehnung der Messfensterträger oder -halterungen veränderten Messabstandes zu umfassen.

Es ist daher die Aufgabe der vorliegenden Erfindung eine Prozessküvette der eingangs erwähnten Art zu schaffen, welche Mittel zur Kompensation der Messabstandsänderung durch temperaturbedingte Längenänderung der Messfensterhalterungen umfasst, um unter allen denkbaren Prozesstemperaturen einen konstanten Messfensterabstand zu gewährleisten. Darüber hinaus soll eine einfache Verstellbarkeit des Messfensterabstandes gegeben sein.

Diese Aufgabe wird erfindungsgemäss gelöst durch eine Prozessküvette gemäss Kennzeichen des Patentanspruches 1. Bevorzugte Ausbildungsformen ergeben sich aus den abhängigen Ansprüchen.

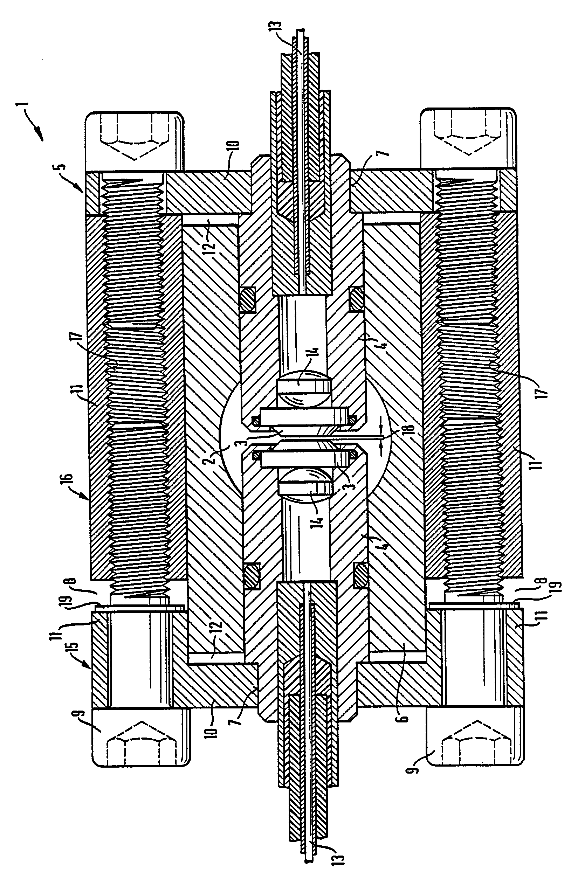

Nachstehend ist die Erfindung mit ihren ihr als wesentlicb zugehörenden Teilen anhand der Zeichnung in einem Ausführungsbeispiel noch näher beschrieben. Dabei zeigt die einzige Figur in schematisierter Darstellung einen Querschnitt des Messraumes der Küvette mit einem Längsschnitt der dort angeordneten Fenster-Halter und deren Halterrahmen.

Eine im ganzen mit 1 bezeichnete Prozessküvette dient vor allem dazu, Lichtmessungen an Flüssigkeiten mit hoher Lichtabsorption bei deren Bearbeitung oder Weiterleitung durchzuführen. Die Prozessküvette hat dazu einen von der Flüssigkeit durchflossenen Messraum 2, welcher zwei bei dieser Messung einander mit geringem Abstand etwa in der Mitte des Messraumes 2 gegenüberliegende Fenster 3 aufweist. Die Flüssigkeit gelangt somit bei dem Durchfliessen des Messraumes 2 zwischen diese beiden Fenster 3, wobei bei dem einen Fenster Licht in den Messraum eingeleitet und an dem gegenüberliegenden Fenster zur Weiterleitung zu einer spektroskopischen Untersuchung aufgefangen wird.

Im dargestellten Ausführungsbeispiel ist vorgesehen, dass die beiden Fenster 3 in Halterungen oder Haltern 4 gefasst sind, die von einem gemeinsamen, im ganzen mit 5 bezeichneten Rahmen getragen werden. Der Rahmen 5 ist relativ zu dem Küvettengehäuse 6 beweglich, so dass Wärmebewegungen möglich sind. Er besteht aus einem Werkstoff mit im wesentlichen demselben Wärmeausdehnungskoeffizienten wie die Halterungen 4. Dabei ragen die beiden Halter 4 mit den Fenstern 3 in den Strömungsquerschnitt der Messkammer 2 und lassen diesen teilweise frei, so dass die Strömung nicht zu stark gedrosselt wird. Ergibt sich aufgrund von Temperaturänderungen eine Längenänderung der Halter 4, erfolgt in gleicher Weise auch eine analoge Längenänderung des Rahmens 5, so dass sich der Abstand 18 zwischen den beiden Fenstern 3 praktisch nicht ändert und aufgrund solcher durch Temperaturschwankungen bedingter Längenänderungen der Halterungen 4 keine über zulässige Toleranzen hinausgehende Messwertverfälschungen auftreten.

In der Zeichnung erkennt man dabei deutlich, dass die Fenster-Halter 4 das Küvettengehäuse 6 etwa radial zum Messraum 2 durchsetzen und der Rahmen 5 um die Aussenseite des Küvettengehäuses 6 verläuft und dass die nur schematisch angedeutete Befestigung 7 der Halter 4 an dem Rahmen 5 ausserhalb des Küvettengehäuses 6 vorgesehen ist. Dabei befindet sich das Küvettengehäuse 6 in Berührkontakt mit den parallel zu den Fenster-Haltern 4 angeordneten Rahmenteilen 11. Dadurch wird sichergestellt, dass die gegenläufigen Längenänderungen der Fenster-Halter 4 und dieser Rahmenteile 11 den Abstand 18 der Fenster 3 jeweils weitgehend gleich halten. Gegebenenfalls kann dabei das Küvettengehäuse 6 aus einem die Wärme gut leitenden Werkstoff bestehen, um eine möglichst gleiche Temperatur sowohl an den Haltern 4 als auch an den Rahmenteilen 11 zu bewirken und somit die erwünschte Kompensation von Abstandsänderungen der einander zugewandten planparallelen Fensterflächen zu ergeben.

Der Rahmen 5 besteht im Ausführungsbeispiel aus praktisch zwei Hauptteilen 15, 16, die ihrerseits noch einmal unterteilt sein können, wobei man in der Zeichnung deutlich eine Tennstelle 8 zwischen den beiden Hauptteilen 15, 16 des Rahmens 5 erkennt. Diese ist mittels Schrauben 9 überbrückt, so dass diese Schrauben 9 zu den parallel zu den Haltern 4 verlaufenden Rahmenteilen gehören. Die von diesen Schrauben 9 verbundenen Hauptteile 15, 16 sind dabei jeweils etwa U-förmig, wobei es für die Wirkung der Erfindung keine Rolle spielt, dass diese U-förmigen Rahmenstücke wiederum jeweils in eine Basisplatte 10 und dieser gegenüber vorstehende Teile 11 unterteilt sind. Die Schrauben 9 haben dabei nicht nur den Vorteil, das das Montieren des Rahmens 5 um das Küvettengehäuse 6 sehr einfach ist, sondern es wird deutlich dass sie im Zusammenwirken mit Innengewinden 17 am Teil 16 auch eine Veränderung des Abstandes der Trennstelle 8 zulassen, soweit die Platten 10 ihrerseits einen Zwischenraum 12 gegenüber dem Küvettengehäuse 6 freilassen, wobei die Schrauben 9 am Teil 15 durch einen Sicherungsring 19 axial unverschieblicb gelagert sind. Somit kann der Abstand 18 zwischen den Fenstern 3 mit Hilfe dieser Schrauben 9 justiert und gegebenenfalls verändert, das heisst auf unterschiedliche Flüssigkeiten eingestellt werden. Dabei ist hilfreich, dass die Befestigungs- und Einstellschrauben 9 für die Rahmenstücke etwa parallel zu den Fensterhaltern 4 orientiert sind. Dadurch wirken sich Veränderungen am Abstand 8 direkt proportional auf den Abstand 18 zwischen den Fenstern 3 aus. Damit kann der Fensterabstand im Bereich von etwa $10^{-6}$ m bis etwa $10^{-2}$ m verstellt werden.

Vorzugsweise sind die Befestigungs- und Einstellschrauben 9 aus einem Material, welches etwa einen vergleichbaren Wärmeausdehnungskoeffizienten aufweist wie der Rahmen 5.

Andere Ausführungsvarianten der Prozessküvette sehen vor, dass der Wärmeausdehnungskoeffizient, somit die Werkstoffe der Fensterhalterungen 4 und des mehrteiligen Rahmens 5 samt der Befestigungs- und Einstellschrauben 9 unterschiedlich gewählt ist, wobei jedoch das Zusammenwirken der temperaturänderungsbedingten Längenänderungen der einzelnen Komponenten 4, 5, 9 in einer Kompensation der Messfensterabstandsänderung resultiert.

Die von den Haltern 4 gefassten Fensterkörper können zum Beispiel aus Saphir oder Quarz bestehen. Für die Lichtzuleitung und/oder zur Lichtableitung an diesen Fenstern 3 sind im Ausführungsbeispiel Lichtwellenleiter 13 über Linsensysteme 14 angeschlossen, so dass sowohl die Lichtquelle als auch das Messgerät mit Abstand zu der eigentlichen Messstelle und somit geschützt untergebracht werden können.

**Patentansprüche**

1. Prozessküvette (1) mit einem von einer insbesondere trüben oder gefärbten oder dergleichen Flüssigkeit mit hoher Lichtabsorption bei deren Bearbeitung oder Weiterleitung durchflossenen Messraum (2), der zwei bei der Messung einander mit geringem Abstand gegenüberliegende Fenster (3) aufweist, wobei bei dem einen Fenster Licht in den Messraum (2) eingeleitet und an dem gegenüberliegenden Fenster zur Weiterleitung zu einer vorzugsweise spektroskopischen Untersuchung in einem Photometer oder dergleichen aufgefangen wird, dadurch gekennzeichnet, dass die beiden Fenster (3) in Halterungen (4) gefasst sind, die von einem gemeinsamen Rahmen (5) oder dergleichen getragen sind, welcher Rahmen (5) relativ zu dem Küvettengehäuse (6) beweglich ist und dass die Werkstoffe der Halterungen (4) und des Rahmens (5) bezüglich ihres Wärmeausdehnungskoeffizienten derart aufeinander abgestimmt sind, dass die temperaturänderungsbedingte Längenänderung des Rahmens (5) die temperaturänderungsbedingte Längenänderung der Halterungen (4) kompensiert.

2. Prozessküvette nach Anspruch 1, dadurch gekennzeichnet, dass die beiden Halter (4) mit den Fenstern (3) in den Strömungsquerschnitt der Messkammer (2) ragen und diesen teilweise freilassen.

3. Prozessküvette nach Anspruch 1 oder 2, dadurch gekennzeichnet, dass die Fenster-Halter (4) das Küvettengehäuse (6) durchsetzen und der Rahmen (5) um die Aussenseite des Küvettengehäuses (6) verläuft und dass die Befestigung (7) der Halter (4) an dem Rahmen (5) ausserhalb des Küvettengehäuses (6) vorgesehen ist.

4. Prozessküvette nach einem der Ansprüche 1 bis 3, dadurch gekennzeichnet, dass das Küvettengehäuse (6) in Berührkontakt zumindest mit den parallel zu den Fenster-Haltern (4) angeordneten Rahmenteilen (11) ist.

5. Prozessküvette nach einem der Ansprüche 1 bis 4, dadurch gekennzeichnet, dass das Küvettengehäuse (6) zumindest im Bereich der Fenster-Halter (4) und des diese tragenden Rahmens (5) aus einem gut wärmeleitenden Werkstoff besteht.

6. Prozessküvette nach einem der Ansprüche 1 bis 5, dadurch gekennzeichnet, das der Rahmen (5) aus wenigstens zwei Hauptteilen (15, 16) besteht, die mittels Schrauben (9) oder dergleichen insbesondere längenverstellbaren Befestigungselementen verbunden sind.

7. Prozessküvette nach einem der Ansprüche 1 bis 6, dadurch gekennzeichnet, dass die Befestigungs- und Einstellschrauben (9) für die Rahmenstücke etwa parallel zu den Fensterhaltern (4) orientiert sind.

8. Prozessküvette nach einem der Ansprüche 1 bis 7, dadurch gekennzeichnet, dass der Rahmen

(5) aus einem Werkstoff gebildet ist, welcher im wesentlichen denselben Wärmeausdehnungskoeffizienten besitzt wie die Halterungen (4) der Fenster.

9. Prozessküvette nach einem der Ansprüche 6 oder 7, dadurch gekennzeichnet, dass die Werkstoffe der Halterungen (4) der Fenster und des mehrteiligen Rahmens (5) samt Schrauben (9) oder dergleichen Befestigungselementen bezüglich ihres Wärmeausdehnungskoeffizienten derart aufeinander abgestimmt sind, dass das Zusammenwirken der temperaturänderungsbedingten Längenänderungen der einzelnen Komponenten (4, 5, 9) die Abstandänderung der beiden Fenster (3) kompensiert.

10. Prozessküvette nach einem der Ansprüche 1 bis 9, dadurch gekennzeichnet, dass die in den Haltern (4) gefassten Fensterkörper aus Saphir oder Quarz bestehen.

11. Prozessküvette nach einem der Ansprüche 1 bis 10, dadurch gekennzeichnet, dass für die Lichtzuleitung und/oder zur Lichtableitung an den Fenstern (3) Lichtwellenleiter (13) gegebenenfalls über Linsensysteme (14) angeschlossen sind.

12. Prozessküvette nach einem der vorstehenden Ansprüche, dadurch gekennzeichnet, dass der Rahmen (5) im Bereich der Schrauben (9) unterbrochen ist und mit seinen quer zu den Schrauben verlaufenden Teilen (10) einen Zwischenraum (12) zu dem Küvettengehäuse (6) hat.

**Revendications**

1. Cuve de mesure (1) à circulation comprenant une chambre de mesure (2) qui est traversée par un liquide notamment trouble ou coloré ou analogue avec une grande absorption de lumière, au cours du traitement ou de la transmission dudit liquide, et qui est munie de deux fenêtres (3) se faisant face à une faible distance lors de la mesure, la lumière étant introduite dans la chambre de mesure (2) par une fenêtre et captée à la fenêtre opposée, en vue de la transmission vers un examen spectroscopique dans un photomètre ou analogue, caractérisée par le fait que les deux fenêtres (3) sont serties dans des supports (4) portés par un cadre (5) commun ou analogue, lequel cadre (5) est mobile par rapport au carter (6) de la cuve, et que les coefficients de dilatation thermique des matériaux des supports (4) et du cadre (5) sont accordés de telle manière que la variation de longueur du cadre (5) due aux variations de température compense la variation de longueur des supports (4) due aux variations de température.

2. Cuve selon la revendication 1, caractérisée par le fait que les deux supports (4) avec les fenêtres (3) font saillie dans la section d'écoulement de la chambre de mesure (2) et laissent cette section partiellement libre.

3. Cuve selon revendication 1 ou 2, caractérisée par le fait que les supports (4) des fenêtres traversent le carter de cuve (6) et le cadre (5) entoure l'extérieur du carter (6) de la cuve et que la fixation (7) des supports (4) au cadre (5) est prévue à l'extérieur du carter (6) de la cuve.

4. Cuve selon l'une des revendications 1 à 3, caractérisée par le fait que le carter (6) de la cuve est en contact au moins avec les parties (11) du cadre qui sont disposées parallèlement aux supports (4) de fenêtre.

5. Cuve selon l'une des revendications 1 à 4, caractérisée par le fait que le carter (6) de la cuve est formé, au moins dans la zone des supports (4) des fenêtres et du cadre (5) portant ceux-ci, d'un matériau bon conducteur de la chaleur.

6. Cuve selon l'une des revendications 1 à 5, caractérisée par le fait que le cadre (5) se compose au moins de deux parties principales (15, 16) qui sont reliées l'une à l'autre au moyen de vis (9) ou d'éléments analogues, notamment d'éléments de fixation à longueur réglable.

7. Cuve selon l'une des revendications 1 à 6, caractérisée par le fait que les vis de fixation et de réglage (9) pour les parties de cadre sont orientées à peu près parallèlement aux supports (4) des fenêtres.

8. Cuve selon l'une des revendications 1 à 7, caractérisée par le fait que le cadre (5) est réalisé en un matériau qui possède sensiblement le même coefficient de dilatation thermique que les supports (4) des fenêtres.

9. Cuve selon la revendication 6 ou 7, caractérisée par le fait que les coefficients de dilatation thermique des matériaux des supports (4) des fenêtres et du cadre (5) en plusieurs parties, y compris les vis (9) ou éléments de fixation analogues, sont accordés de telle manière que l'action conjointe des variations de longueur, dues aux températures, des différents composants (4, 5, 9) compense la variation de distance entre les deux fenêtres (3).

10. Cuve selon l'une des revendications 1 à 9, caractérisée par le fait que les corps de fenêtre sertis dans les supports (4) sont en saphir ou en quartz.

11. Cuve selon l'une des revendications 1 à 10, caractérisée par le fait que des guides (13) d'ondes lumineuses sont raccordés aux fenêtres (3), le cas échéant par des systèmes à lentille (14), en vue de l'arrivée et/ou du départ de la lumière.

12. Cuve selon l'une des revendications précédentes, caractérisée par le fait que le cadre (5) est discontinu dans la zone des vis (9) et ses parties (10) perpendiculaires aux vis délimitent un espace intermédiaire (12) avec le carter (6) de la cuve.

**Claims**

1. Process cell (1) with a measuring chamber (2) through which there flows in particular a cloudy or dyed or similar liquid with high light absorption during its processing or further conveyance, which chamber has two windows (3) which during the measurement lie opposite each other at a short spacing, light being introduced into the measuring chamber (2) at one window and being received at the opposite window for further conveyance for preferably spectroscopic examination in a photometer or the like, characterised in that the two windows (3) are held in holding devices (4), which are supported by a common frame (5) or the like, which frame (5) is movable relative to the cell housing (6), and that the materials of the holding devices (4) and of the frame (5) are matched with regard to their coefficients of thermal expansion so that the change in length of the frame (5) which is determined by changes in temperature compensates for the change in length of the holding devices (4) which is determined by changes in temperature.

2. Process cell according to Claim 1, characterised in that the two holders (4) with the windows (3) project into the flow cross-section of the measuring chamber (2) and leave this partly open.

3. Process cell according to Claim 1 or 2, characterised in that the window holders (4) penetrate the cell housing (6) and the frame (5) runs around the outside of the cell housing (6) and that the attaching means (7) for attaching the holders (4) to the frame (5) is provided outside the cell housing (6).

4. Process cell according to one of Claims 1 to 3, characterised in that the cell housing (6) is in contact at least with the frame components (11) arranged parallel to the window hoders (4).

5. Process cell according to one of Claims 1 to 4, characterised in that the cell housing (6), at least in the area of the window holders (4) and the frame (5) supporting them, consists of a material which conducts heat well.

6. Process cell according to one of Claims 1 to 5, characterised in that the frame (5) consists of at least two main components (15, 16) which are connected by means of screws (9) or the like, in particular fastening elements of adjustable length.

7. Process cell according to one of Claims 1 to 6, characterised in that the fastening and adjusting screws (9) for the frame components are orientated approximately parallel to the window holders (4).

8. Process cell according to one of Claims 1 to 7, characterised in that the frame (5) is formed of a material which has essentially the same coefficient of thermal expansion as the holding devices (4) of the windows.

9. Process cell according to one of Claims 6 or 7, characterised in that the materials of the holding devices (4) of the windows and of the multi-part frame (5) including screws (9) or similar fastening elements are matched with regard to their coefficients of thermal expansion so that the cooperation of the changes in length of the individual components (4, 5, 9) determined by changes in temperature compensates for the change in spacing between the two windows (3).

10. Process cell according to one of Claims 1 to 9, characterised in that the window members held in the holders (4) consist of sapphire or quartz.

11. Process cell according to one of Claims 1 to 10, characterised in that light wave guides (13) are connected to the windows (3), optionally by lens systems (14), for supplying light and/or carrying away light.

12. Process cell according to one of the preceding Claims, characterised in that the frame (5) is interrupted in the region of the screws (9) and has an intermediate space (12) between its components (10) running at right angles to the screws and the cell housing (6).